Europäisches Patentamt

European Patent Office

Office européen des brevets

(19)

(11) **EP 0 843 867 B1**

(12) **FASCICULE DE BREVET EUROPEEN**

(45) Date de publication et mention
de la délivrance du brevet:
**19.05.1999 Bulletin 1999/20**

(21) Numéro de dépôt: **96924925.9**

(22) Date de dépôt: **03.07.1996**

(51) Int Cl.⁶: **G06T 5/20**

(86) Numéro de dépôt international:
**PCT/FR96/01033**

(87) Numéro de publication internationale:
**WO 97/03414 (30.01.1997 Gazette 1997/06)**

(54) **PROCEDE DE TRAITEMENT D'UNE SEQUENCE SOURCE D'IMAGES NUMERIQUES BRUITEES**

VERFAHREN ZUR VERARBEITUNG EINER NUMERISCHEN VERRAUSCHTEN
QUELLBILDSEQUENZ

METHOD FOR PROCESSING A NOISY DIGITAL IMAGE SOURCE SEQUENCE

(84) Etats contractants désignés:
**DE FR GB**

(30) Priorité: **11.07.1995 FR 9508632**

(43) Date de publication de la demande:
**27.05.1998 Bulletin 1998/22**

(73) Titulaire: **Key Concept**
**75012 Paris (FR)**

(72) Inventeur: **BRICOURT, Ricardo**
**F-75013 Paris (FR)**

(74) Mandataire: **Vidon, Patrice et al**
**Cabinet Patrice Vidon,**
**Immeuble Germanium,**
**80, Avenue des Buttes-de-Coesmes**
**35700 Rennes (FR)**

(56) Documents cités:
**EP-A- 0 550 166          EP-A- 0 574 969**

- **IEE TRANSACTIONS ON PATTERN ANALYSIS AND MACHINE INTELLIGENCE, vol. 10, no. 2, Mars 1988, USA, pages 267-270, XP000566410 NOMOURA Y. & NARUSE H.: "Reduction of Obscuration Noise Using Multiple Images."**
- **VISUAL COMMUNICATIONS AND IMAGE PROCESSING, vol. 1818, PT 1, 18 - 20 Novembre 1992, BOSTON, MA, USA, pages 322-331, XP000565996 KOKARAM A. C. & RAYNER P. J. W.: "A System for the Removal of Impulsive Noise in Image Sequences."**

EP 0 843 867 B1

## Description

Le domaine de l'invention est celui des images numériques, que celles-ci soient générées directement par un système d'acquisition numérique ou bien numérisées après leur acquisition.

Plus précisément, l'invention concerne un procédé de traitement d'une séquence source d'images numériques ayant été endommagées (c'est-à-dire présentant un bruit élevé), de façon à obtenir une séquence de sortie d'images numériques corrigées.

D'une façon générale, le bruit qui affecte les images numériques se traduit par une dégradadation du contraste de ces images en fonction de l'intensité du bruit et par une perte d'informations dans les zones endommagées de ces images.

Il existe plusieurs types de bruit, tels que notamment les bruits dus aux mouvement ou défocalisation du capteur rendant les images floues (motion/focus blur en anglo-saxon), les bruits sous forme de tâches (speckle noise en anglo-saxon) ou encore les bruits dus aux mesures (bruits additifs ou multiplicatifs).

Il convient donc de compenser les effets du bruit, de façon à permettre la restitution d'une séquence d'images présentant une qualité suffisante.

Il existe plusieurs techniques connues de correction de séquences d'images endommagées, telles que notamment le filtrage inverse ou le calcul de la moyenne de la séquence d'images.

La technique connue du filtrage inverse consiste à appliquer l'inverse de la fonction de transfert à l'image endommagée. Ceci suppose que le type de bruit (ou une approximation de celui-ci soit connu. Or cela n'est pas toujours le cas. Par ailleurs, cette technique connue du filtrage inverse est peu efficace lorsque le rapport bruit / signal est élevé.

D'une façon générale, la seconde technique connue, qui consiste à calculer la moyenne de la séquence d'images, ne permet pas d'apporter une correction suffisante aux images endommagées.

La technique connue du filtrage inverse présente quant à elle l'inconvénient majeur d'être spécifique à un type de bruit particulier et d'introduire des erreurs lorsque la séquence d'images contient des objets mobiles. Par conséquent, lorsqu'elle est mise en oeuvre pour corriger un type de bruit différent de celui pour lequel elle est prévue, elle engendre des pertes d'informations supplémentaires.

Par ailleurs, dans la plupart de ces techniques connues, la correction de chaque image de la séquence est effectuée en plusieurs passes successives, chaque passe correspondant à un filtrage de correction dont les paramètres peuvent être modifiés par un opérateur (on parle dans ce cas de filtrage interactif). Le temps nécessaire à l'exécution de ces passes successives rend impossible une correction en temps réel de la séquence d'images numériques endommagées.

L'invention a notamment pour objectif de pallier ces différents inconvénients de l'état de la technique.

Plus précisément, l'un des objectifs de la présente invention est de fournir un procédé de traitement d'une séquence source d'images numériques endommagées, du type permettant d'obtenir une séquence de sortie d'images d'images numériques corrigées, qui soit indépendant du type de bruit affectant les images de la séquence source.

L'invention a également pour objectif de fournir un tel procédé qui permette un traitement en temps réel de la séquence source.

Un autre objectif de l'invention est de fournir un tel procédé qui permette de restituer une séquence source d'images représentant un panorama (avec ou sans objets mobiles), ainsi que le contraste de ces images.

Ces différents objectifs, ainsi que d'autres qui apparaîtront par la suite, sont atteints selon l'invention à l'aide d'un procédé de traitement d'une séquence source d'images numériques endommagées, du type permettant d'obtenir une séquence de sortie d'images numériques corrigées, chacune des images numériques endommagées ou corrigées étant décrite pixel par pixel, chacun desdits pixels étant caractérisé par un niveau d'amplitude parmi une pluralité de niveaux d'amplitude possibles,

caractérisé en ce que ledit procédé comprend notamment, pour chaque image numérique endommagée de ladite séquence source, les étapes de base suivantes :

- calcul, pour l'ensemble des pixels de l'image endommagée, d'un premier paramètre, dit paramètre global, d'estimation de la correction à apporter à chacun des pixels de l'image endommagée, en fonction dudit ensemble des pixels de l'image endommagée et de l'ensemble des pixels d'une image de référence, ladite image de référence étant une image corrigée qui résulte de la correction de l'image précédant ladite image endommagée dans ladite séquence source ;

- calcul, pour chaque pixel donné de l'image endommagée, d'un second paramètre, dit paramètre local, d'estimation de la correction à apporter audit pixel donné, en fonction dudit pixel donné et d'autres pixels, dits pixels voisins, localisés dans un voisinage prédéterminé dudit pixel donné ;

- calcul, pour chaque pixel donné de l'image endommagée, d'un troisième paramètre, dit paramètre temporel, d'estimation de la correction à apporter audit pixel donné, en fonction dudit pixel donné et du pixel de l'image de référence possédant les mêmes coordonnées spatiales que ledit pixel donné ;

- calcul, pour chaque pixel donné de l'image endommagée, d'un coefficient de correction, par combinaison desdits premier, second et troisième paramètres d'estimation associés audit pixel donné ;
- correction, selon une stratégie de correction prédéterminée, de chaque pixel donné de l'image endommagée de façon à obtenir le pixel correspondant de l'image corrigée de la séquence de sortie, en fonction du coefficient de correction associé audit pixel donné, du pixel donné de l'image endommagée et du pixel de l'image de référence possédant les mêmes coordonnées spatiales que ledit pixel donné.

Ainsi, le principe général de l'invention consiste à traiter successivement chacune des images endommagées formant la séquence source. Pour chaque image endommagée, on corrige chacun des pixels en fonction d'un coefficient de correction qui lui est associé et qui résulte de la combinaison de trois paramètres distincts (respectivement global, local et temporel) d'estimation de la correction à apporter au pixel.

Grâce à cette combinaison de trois paramètres fournissant chacun des indications distinctes sur la correction à apporter, le procédé de l'invention n'est pas interactif et ne nécessite qu'une seule passe de traitement pour chaque image endommagée. De plus, la plupart des calculs peuvent se présenter sous forme matricielle. Par conséquent, le procédé de l'invention est parfaitement adapté à une mise en oeuvre en temps réel.

Par ailleurs, cette combinaison de trois paramètres rend le procédé de l'invention pratiquement indépendant du type de bruit affectant les images de la séquence source. Ceci permet de ne faire qu'un nombre limité d'hypothèses quant au type de bruit ayant affecté les images de la séquence source. On peut par exemple se limiter aux hypothèses selon lesquelles le bruit est distribué et intermittent. En d'autres termes, le procédé de l'invention est du type adaptatif et convient quel que soit le type de bruit à compenser.

Le premier paramètre (ou paramètre global) est commun à tous les pixels d'une même image endommagée, et fournit une indication sur la qualité générale de cette image endommagée, par comparaison avec l'image corrigée précédente (ou image de référence).

Avantageusement, ledit calcul, pour l'ensemble des pixels de l'image endommagée, du premier paramètre P1 s'écrit selon la formule suivante : $P1 = K + f_E (H1, H2)$
où :

- K est une valeur de décalage prédéterminée ;
- H1 est un premier histogramme des niveaux d'amplitude des pixels de l'image endommagée ;
- H2 est un second histogramme des niveaux d'amplitude des pixels de l'image de référence ;
- $f_E$ est une fonction d'erreur prédéterminée permettant de calculer un écart entre deux fonctions.

La fonction d'erreur prédéterminée est par exemple basée sur la méthode des moindres carrés. Elle peut également être basée sur la différence des variances des histogrammes de l'image endommagée et de l'image de référence.

La valeur de décalage prédéterminée (ou offset) permet, si elle est choisie différente de zéro, d'éviter que le premier paramètre soit nul lorsque les deux histogrammes sont identiques (cas où $f_E (H1, H2) = 0$).

Le second paramètre (ou paramètre local) est spécifique à chacun des pixels d'une même image endommagée. Il fournit une indication sur la présence d'une discontinuité spatiale, par comparaison avec les pixels voisins de la même image endommagée. En effet, le bruit se traduit par une discontinuité spatiale assez prononcée dans une même image. Par conséquent, la détection d'une telle discontinuité spatiale au niveau d'un pixel indique une probabilité assez forte pour que ce pixel soit bruité.

De façon avantageuse, ledit calcul du second paramètre est effectué simultanément pour tous les pixels de l'image endommagée, et s'écrit selon la formule suivante :

$$[M_{P2}] = (1/\alpha_2).([I_t] - F_2[I_t])$$

où :

- $[M_{P2}]$ est une matrice des seconds paramètres P2 associés chacun à un pixel distinct de l'image endommagée ;
- $[I_t]$ est une matrice des valeurs d'amplitude des pixels de l'image endommagée;
- $F_2$ est un filtrage moyen ou médian ou passe-bas ou tout autre filtrage adapté au bruit traité ;
- $\alpha_2$ est un premier facteur de normalisation.

On peut éventuellement utiliser une combinaison de filtreages moyen, médian et passe-bas, au lieu d'utiliser un seul filtrage, de façon à combiner les avantages des différents types de filtrage.

Le troisième paramètre (ou paramètre temporel) est spécifique à chacun des pixels d'une même image endommagée. Il fournit une indication sur un changement de valeur d'amplitude, par comparaison avec le pixel de l'image corrigée précédente (image de référence) possédant les mêmes coordonnées spatiales. En effet, le bruit se traduit également par une discontinuité temporelle assez prononcée entre deux images succesives. Par conséquent, la détection d'une telle discontinuité temporelle au niveau d'un pixel indique une probabilité assez forte pour que ce pixel soit bruité. Il convient toutefois de s'assurer que cette discontinuité temporelle n'est pas due à un objet en mouvement entre les images successives.

Préférentiellement, ledit calcul du troisième paramètre est effectué simultanément pour tous les pixels de l'image endommagée, et s'écrit selon la formule suivante :

$$[M_{P3}] = (1/\alpha_3).F_3 \{[I_t] - [I_{t-1}]\}$$

où :

- $[M_{P3}]$ est une matrice des troisièmes paramètres P3 associés chacun à un pixel distinct de l'image endommagée ;
- $[I_t]$ est une matrice des valeurs d'amplitude des pixels de l'image endommagée ;
- $[I_{t-1}]$ est une matrice des valeurs d'amplitude des pixels de l'image de référence ;
- $F_3$ est un filtrage moyen ou médian ou passe-bas ;
- $\alpha_3$ est un second facteur de normalisation.

Le filtrage permet de ne pas prendre en compte des changements de valeurs d'amplitude de pixel dus à des mouvements d'objet entre les images successives.

De façon préférentielle, ledit calcul du coefficient de correction s'écrit selon la formule suivante :

$$C = \max [1, P1 . f_c (P2, P3)]$$

où :

- P1, P2 et P3 sont lesdits premier, second et troisième paramètres normalisés à 1 ;
- $f_c$ est une fonction de combinaison prédéterminée.

Avantageusement, ladite stratégie de correction prédéterminée consiste, pour chaque pixel donné de l'image endommagée, à calculer une valeur d'amplitude de pixel corrigé $I_t'$ (x, y ) selon la formule suivante :

$$I_t' (x, y) = R_1 (C) . I_t (x, y) + R_2 (C) . I_{t-1}(x, y)$$

où :

- $I_t$ (x, y ) est la valeur d'amplitude du pixel donné de l'image endommagée;
- $I_{t-1}$ (x, y ) est la valeur d'amplitude du pixel de l'image de référence possédant les mêmes coordonnées spatiales (x, y) que le pixel donné ;
- C est le coefficient de correction normalisé à 1 ;
- $R_1$ et $R_2$ sont des fonctions de répartition respectant les contraintes suivantes : $R_1 (C) + R_2 (C) \leq 1$, $R_1$ est une fonction décroissante telle que $R_1 (0) = 1$, $R_2$ est une fonction croissante telle que $R_2 (1) = 1$.

Ainsi, on peut distinguer les trois cas suivants :

- si C = 0, la valeur d'amplitude du pixel corrigé est égale à la valeur d'amplitude du pixel de l'image endommagée (pas de remplacement);
- si C = 1, la valeur d'amplitude du pixel corrigé est égale à la valeur d'amplitude du pixel de l'image de référence (remplacement complet) ;
- si 0 < C < 1, la valeur d'amplitude du pixel corrigé est égale à une somme pondérée des valeurs d'amplitude du pixel de l'image endommagée et du pixel de l'image de référence (remplacement pondéré).

Selon une variante avantageuse, ladite stratégie de correction prédéterminée consiste, pour chaque pixel donné de l'image endommagée, à calculer une valeur d'amplitude de pixel corrigé $I_t''$ (x, y ) selon la formule suivante :

$$I_t'' (x, y) = R_1 (C) . I_t (x,y) + R_2 (C) . I_{t-1} (x, y) + R_3 (C) . I_{t,F} (x, y)$$

où :

- $I_t$ (x, y ) est la valeur d'amplitude du pixel donné de l'image endommagée;
- $I_{t-1}$ (x, y ) est la valeur d'amplitude du pixel de l'image de référence possédant les mêmes coordonnées spatiales (x, y) que le pixel donné ;
- $I_{t,F}$ (x, y ) est la valeur d'amplitude du pixel d'une image filtrée possédant les mêmes coordonnées spatiales (x, y) que le pixel donné, ladite image filtrée étant obtenue par un filtrage moyen ou médian ou passe-bas ou tout autre filtrage adapté au bruit traité de l'image endommagée ;
- C est le coefficient de correction normalisé à 1 ;
- $R_1$, $R_2$ et $R_3$ sont des fonctions de répartition respectant les contraintes suivantes : $R_1 (C) + R_2 (C) + R_3 (C) \le 1$, $R_1$ est une fonction décroissante telle que $R_1 (0) = 1$, $R_2$ est une fonction croissante telle que $R_2 (1) = 1$.

Préférentiellement, ledit procédé comprend, pour chaque pixel donné de l'image endommagée, les étapes de base supplémentaires suivantes :

- calcul d'une probabilité d'erreur sur la valeur d'amplitude du pixel donné, en fonction de l'écart entre le nombre de pixel de l'image endommagée et le nombre de pixel de l'image de référence possédant la même valeur d'amplitude que ledit pixel donné, ladite probabilité d'erreur constituant un quatrième paramètre d'estimation de la correction à apporter audit pixel donné ;
- pondération par ledit quatrième paramètre des premier et second paramètres ou du coefficient de correction associé audit pixel donné.

Ces deux étapes supplementaires permettent d'affiner le calcul du coefficient de correction.
Dans un mode de réalisation préférentiel de l'invention, ledit procédé comprend les étapes de base préalables suivantes :

- calcul d'un premier histogramme des niveaux d'amplitude des pixels de l'image endommagée ;
- calcul d'un second histogramme des niveaux d'amplitude des pixels de l'image de référence ;
- calcul de l'écart entre les valeurs moyennes desdits premier et second histogrammes;
- correction des valeurs d'amplitude des pixels de l'image endommagée en fonction dudit écart de valeur moyenne, de façon à équilibrer les valeurs d'amplitude des pixels de l'image endommagée avec celles des pixels de l'image de référence, et obtenir une image endommagée précorrigée qui est utilisée à la place de l'image endommagée dans toutes les autres étapes dudit procédé.

Ces étapes préalables correspondent à la mise en oeuvre d'une correction de gain sur les valeurs d'amplitude de l'image endommagée en fonction des valeurs d'amplitude de l'image de référence.
Selon une variante avantageuse du procédé de l'invention, dans laquelle le procédé est du type consistant, pour chaque image numérique endommagée de la séquence source (constituant une image numérique à corriger de niveau n) à effectuer notamment les étapes successives suivantes :

- réduction de la taille de l'image numérique à corriger de niveau n, de façon à obtenir une numérique à corriger de niveau n+k, avec k $\ge$ 1 ;
- traitement, de niveau hiérarchique n+k, de l'image numérique à corriger de niveau n+k, de façon à obtenir une image numérique corrigée de niveau n+k ;
- agrandissement de la taille de l'image numérique corrigée de niveau n+k, de façon à obtenir une image numérique corrigée de niveau n+k-1 ;
- éventuellement, réitération des deux étapes précédentes de traitement et d'agrandissement de taille, jusqu'à l'obtention d'une image numérique corrigée de niveau n;
- éventuellement, traitement, de niveau hiérarchique n, de l'image numérique corrigée de niveau n,

le procédé de l'invention est caractérisé en ce qu'au moins une desdites étapes de traitement, d'un niveau hiérarchique donné, consiste à mettre en oeuvre au moins une fois lesdites étapes de base.
Le principe de cette hiérarchisation du traitement (ou traitement à plusieurs niveaux) est de réduire la taille de l'image à traiter afin d'être en mesure d'appliquer des traitements demandant plus de temps ou de puissance de calcul.

Ainsi, le traitement de chaque image numérique endommagée de la séquence source est affiné et amélioré. Pour chaque niveau hiérarchique, le traitement peut consister à effectuer une ou plusieurs fois les étapes de base précitées (à savoir les étapes de calcul des différents paramètres et du coefficient de correction, puis de correction proprement dite) et/ou à effectuer un ou plusieurs filtrages (par exemple, du type moyen, médian ou passe-bas).

Préférentiellement, au moins un desdits premier, second, troisième et quatrième paramètres est pondéré en fonction du niveau hiérarchique du traitement que constituent au moins partiellement lesdites étapes de base.

De cette façon, on peut conserver le déplacement de gros objets. En effet, il est à noter qu'une image au niveau n (par exemple, n = 0) est assez sensible aux objets en mouvement, tandis qu'une image à un niveau supérieur (par exemple, n + 2) l'est moins car les déplacements sont plus petits. Afin de conserver le déplacement de gros objets, il est préférable que, pour les traitements de niveaux supérieurs, l'effet de certains paramètres (par exemple, le paramètre temporel) soit diminué et/ou l'effet d'autres paramètres (par exemple, le local) soit favorisé.

Avantageusement, le procédé de l'invention s'applique au traitement en temps réel d'une séquence source d'images numériques endommagées.

D'autres caractéristiques et avantages de l'invention apparaîtront à la lecture de la description suivante d'un mode de réalisation préférentiel de l'invention, donné à titre d'exemple indicatif et non limitatif, et des dessins annexés, dans lesquels :

- la figure 1 illustre l'application du procédé selon l'invention ;
- la figure 2 présente un mode de réalisation particulier du procédé selon l'invention ;
- la figure 3 illustre le fonctionnement du procédé de la figure 2 ;
- les figures 4A et 4B présentent respectivement, de façon schématique, une image endommagée et une image de référence correspondante ;
- les figures 5, 6 et 7 illustrent chacune un mode de réalisation distinct du calcul du coefficient de correction d'un pixel en fonction des trois ou quatre paramètres associés à ce pixel ;
- la figure 8 présente de façon schématique les étapes successives de traitement de chaque image selon une variante du procédé de l'invention, basée sur une hiérarchisation du traitement ; et
- la figure 9 illustre la variante de la figure 8, en présentant un exemple d'images à différents niveaux de traitement.

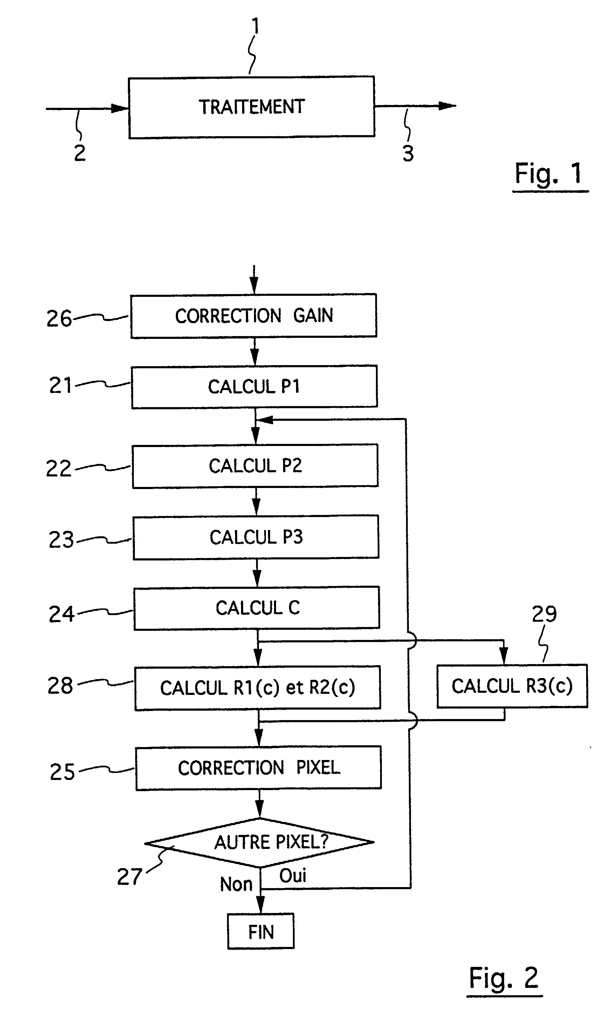

L'invention concerne donc un procédé de traitement d'images numériques. Plus précisément, comme présenté sur la figure 1, l'invention s'applique au traitement 1 d'une séquence source 2 d'images numériques endommagées, de façon à d'obtenir une séquence de sortie 3 d'images numériques corrigées.

De façon connue, les images numériques (endommagées ou corrigées) sont composées d'une pluralité de pixels caractérisé chacun par un niveau d'amplitude parmi plusieurs possibles.

Par niveau d'amplitude, on entend par exemple, pour une image en noir et blanc, le niveau de gris (généralement compris entre 0 et 255). Dans le cas d'une image couleur, chacune des trois couleurs de base peut être traitée séparément. Ceci revient à effectuer, sur chacune des trois images associée à une couleur distincte, un traitement du type noir et blanc. Selon une variante, le niveau d'amplitude est égal au niveau d'intensité de l'image couleur.

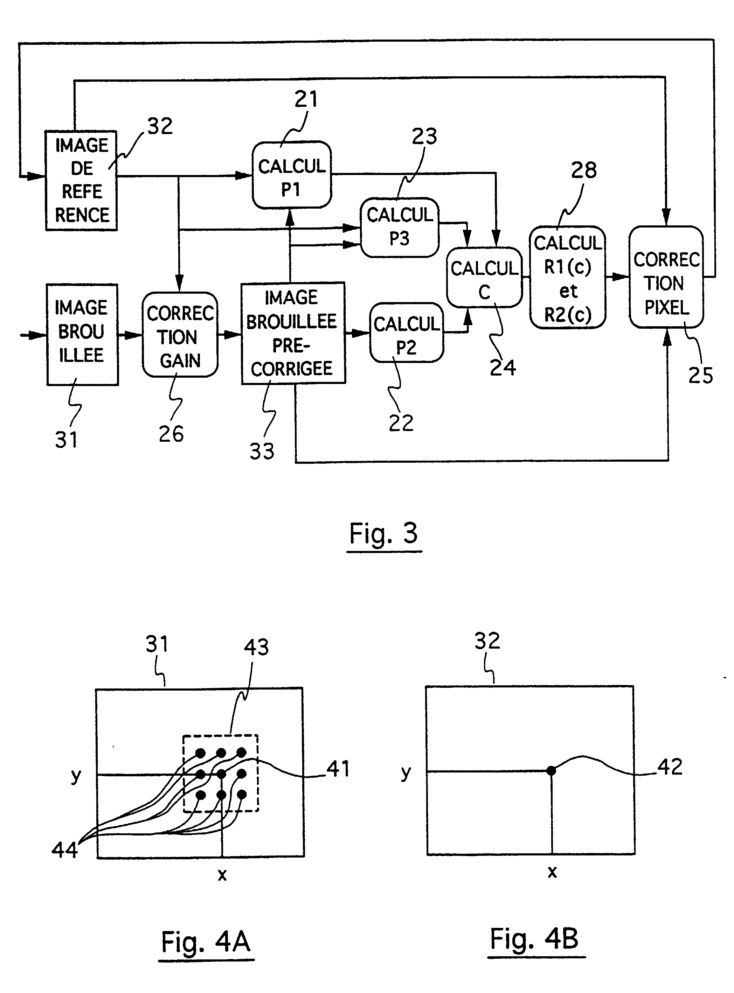

La figure 2 présente un mode de réalisation particulier du procédé selon l'invention, et la figure 3 en illustre le fonctionnenent.

Dans un mode de réalisation particulier, le procédé selon l'invention comprend, pour chaque image numérique endommagée 31 de la séquence source 2, les étapes suivantes :

- calcul (21) d'un premier paramètre P1, dit paramètre global, d'estimation de la correction à apporter à chacun des pixels de l'image endommagée 31 ;
- calcul (22) d'un second paramètre P2, dit paramètre local, d'estimation de la correction à apporter à un pixel donné de l'image endommagée 31 ;
- calcul (23) d'un troisième paramètre P3, dit paramètre temporel, d'estimation de la correction à apporter à un pixel donné de l'image endommagée 31 ;
- calcul (24) d'un coefficient de correction C d'un pixel donné de l'image endommagée 31, par combinaison des premier, second et troisième paramètres P1, P2, P3 associés à ce pixel donné ;
- correction (25) d'un pixel donné de l'image endommagée 31, en fonction du coefficient de correction C associé à ce pixel donné.

L'étape 21 de calcul du premier paramètre P1 est commune à tous les pixels d'une même image endommagée 31. Par contre, les étapes suivantes 22, 23, 24 (calcul des second et troisième paramètres P2, P3, calcul du coefficient de correction C et correction de pixel) sont répétées pour chacun des pixels de l'image endommagée 31, jusqu'à ce que tous les pixels aient été traités.

On détaille maintenant successivement chacune de ces étapes 21 à 25.

L'étape 21 de calcul du premier paramètre P1, qui est commune à l'ensemble des pixels de l'image endommagée 31, est fonction de l'ensemble des pixels d'une image de référence 32. Cette image de référence 32 est l'image corrigée appartenant à la séquence de sortie 3, qui résulte de la correction de l'image précédant l'image endommagée 31 dans la séquence source 2. En d'autres termes, l'image de référence 32 d'une image endommagée 31 de rang n dans la séquence source 2 est le résultat du traitement de l'image endommagée de rang n - 1 dans cette même séquence source 2.

Dans le présent mode de réalisation, le premier paramètre P1 est un scalaire tel que:

$$P1 = K + f_E (H1, H2)$$

où :

- K est une valeur de décalage prédéterminée ;
- H1 est un premier histogramme des niveaux d'amplitude des pixels de l'image endommagée ;
- H2 est un second histogramme des niveaux d'amplitude des pixels de l'image de référence ;
- $f_E$ est une fonction d'erreur prédéterminée permettant de calculer un écart entre deux fonctions.

La valeur de décalage K est par exemple égale à 1. La fonction d'erreur $f_E$ est par exemple la fonction des moindres carrés. D'une façon générale, $f_E$ (H1, H2) indique la distance entre les premier et second histogrammes H1, H2.

L'étape 22 de calcul du second paramètre P2, qui est réalisée pour chaque pixel donné de l'image endommagée 31, est fonction de ce pixel donné et de pixels voisins de ce pixel donné.

La figure 4A présente de façon schématique l'image endommagée 31 et permet d'expliciter la notion de pixels voisins. Le pixel donné à traiter 41 possède ici les coordonnées spatiales (x, y). Les pixels voisins 44 de ce pixel donné 41 sont ceux compris dans une zone de voisinage 43 prédéterminée (par exemple une fenêtre de N pixels sur N pixels, centrée sur le pixel donné 41).

Dans le présent mode de réalisation, le calcul 22 du second paramètre P2 est effectué simultanément pour tous les pixels de l'image endommagée (31), et s'écrit selon la formule suivante :

$$[M_{P2}] = (1/\alpha_2) \cdot ([I_t] - F_2[I_t])$$

où :

- $[M_{P2}]$ est une matrice des seconds paramètres P2 (chacun étaassociés chacun à un pixel distinct de l'image endommagée 31 ;
- $[I_t]$ est une matrice des valeurs d'amplitude des pixels de l'image endommagée 31 ;
- $F_2$ est un filtrage moyen ou médian ou passe-bas ou tout autre filtrage adapté au bruit traité;
- $\alpha_2$ est un premier facteur de normalisation (par exemple égal à la moyenne ou à la médiane pour un filtrage $F_2$ moyen ou médian respectivement).

L'étape 23 de calcul du troisième paramètre P3, qui est réalisée pour chaque pixel donné 41 de l'image endommagée 31, est fonction de ce pixel donné 41 et du pixel de l'image de référence possédant les mêmes coordonnées spatiales que ce pixel donné 41.

La figure 4B présente, de façon schématique, l'image de référence 32 correspondant à l'image endommagée 31 de la figure 4A. On y a représenté le pixel 42 possédant les mêmes coordonnées spatiales que le pixel donné 41 de l'image endommagée 31.

Dans le présent mode de réalisation, le calcul 23 du troisième paramètre P3 est effectué simultanément pour tous les pixels de l'image endommagée 31, et s'écrit selon la formule suivante :

$$[M_{P3}] = (1/\alpha_3) \cdot F_3 \{[I_t] - [I_{t-1}]\}$$

où :

- $[M_{P3}]$ est une matrice des troisièmes paramètres P3 associés chacun à un pixel distinct de l'image endommagée 31 ;

- [$I_t$] est une matrice des valeurs d'amplitude des pixels de l'image endommagée 31 ;
- [$I_{t-1}$] est une matrice des valeurs d'amplitude des pixels de l'image de référence 32 ;
- $F_3$ est un filtrage moyen ou médian ou passe-bas ;
- $\alpha_3$ est un second facteur de normalisation (par exemple égal à la moyenne ou à la médiane pour un filtrage $F_3$ moyen ou médian respectivement).

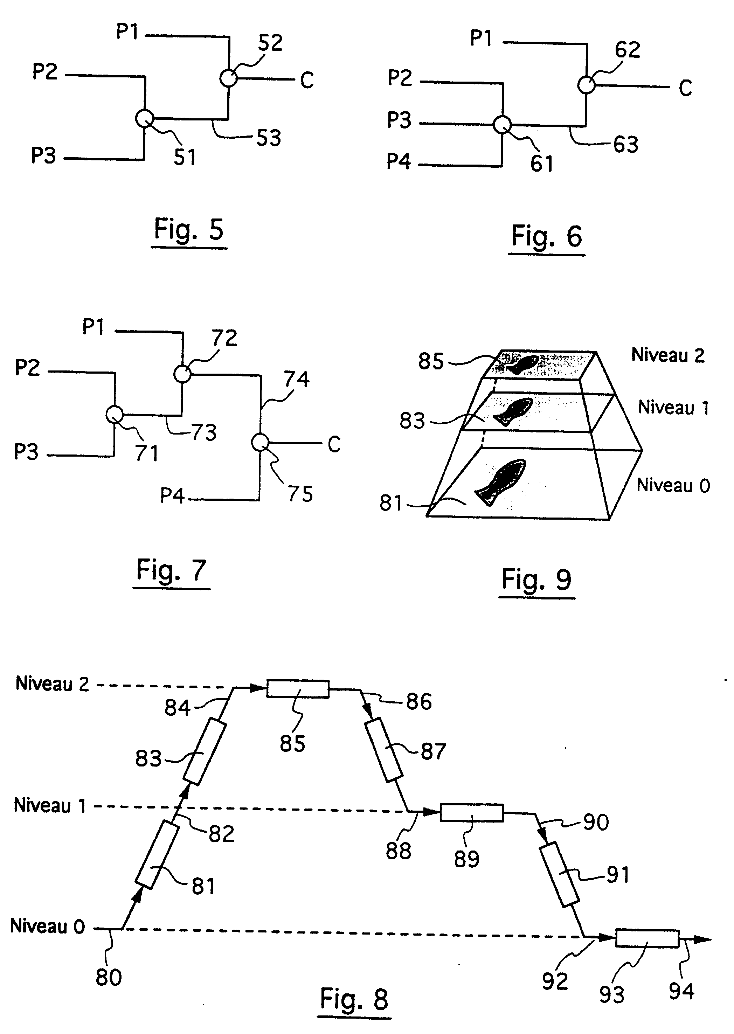

Dans un premier mode de réalisation, illustré sur la figure 5, le coefficient de correction C est tel que : C = max [1, P1 . $f_c$ (P2, P3)]
où :

- P1, P2 et P3 sont les premier, second et troisième paramètres normalisés à 1 ;
- $f_c$ est une fonction de combinaison prédéterminée (par exemple, une moyenne pondérée).

Les paramètres P2 et P3 sont combinés (51), par exemple par une sommation pondérée, et le résultat de cette combinaison 53 est multiplié (52) par le premier paramètre P1, de façon à obtenir le coefficient de correction C.
Un second et un troisième modes de réalisation du calcul du coefficient de correction C sont maintenant explicités, en relation avec les figures 6 et 7. Ces deux variantes nécessitent, pour chaque pixel donné de l'image endommagée 31, le calcul d'un quatrième paramètre P4 d'estimation de la correction à apporter à ce pixel donné 41.
Ce quatrième paramètre P4 est une probalité d'erreur sur la valeur d'amplitude du pixel donné 41, en fonction de l'écart E entre le nombre de pixel de l'image endommagée 31 et le nombre de pixel de l'image de référence possédant la même valeur d'amplitude que le pixel donné 41. L'écart E s'écrit par exemple : $\sqrt{|H1(n) - H2(n)|}$
où :

- H1 et H2 sont les histogrammes des niveaux d'amplitude des pixels respectivement de l'image endommagée 31 et de l'image de référence 32 ;
- n est la valeur d'amplitude du pixel donné 41.

Dans le second mode de réalisation du calcul du coefficient de correction C (cf fig.6), les second, troisième et quatrième paramètres P2, P3 et P4 sont combinés (61), par exemple par une sommation pondérée, et le résultat de cette combinaison 63 est multiplié (62) par le premier paramètre P1, de façon à obtenir le coefficient de correction C.
Dans le troisième mode de réalisation du calcul du coefficient de correction C (cf fig.7), les paramètres P2 et P3 sont combinés (71), par exemple par une sommation pondérée, et le résultat de cette combinaison 73 est multiplié (72) par le premier paramètre P1. Le résultat de cette multiplication 74 est combiné à ou multiplié avec (75) le quatrième paramètre P4, de façon à obtenir le coefficient de correction C.
L'étape 25 de correction d'un pixel donné 41 de l'image endommagée 31, en fonction du coefficient de correction C associé à ce pixel donné 41, est effectuée selon une stratégie de correction prédéterminée. L'image corrigée correspondant à l'image endommagée 31 est obtenue après que tous les pixels de cette image endommagée ont été corrigés. On rappelle ici que cette image corrigée servira d'image de référence pour le traitement de l'image endommagée suivante de la séquence source 2.
Un premier mode de réalisation de la stratégie de correction prédéterminée consiste, pour chaque pixel donné 41 de l'image endommagée 31, à calculer une valeur d'amplitude de pixel corrigé $I_t'$ (x, y ) selon la formule suivante :

$$I_t' (x, y) = R_1 (C) . I_t (x, y) + R_2 (C) . I_{t-1} (x, y)$$

où :

- $I_t(x, y )$ est la valeur d'amplitude du pixel donné 41 de l'image endommagée 31;
- $I_{t-1}$ (x, y ) est la valeur d'amplitude du pixel 42 de l'image de référence 32 possédant les mêmes coordonnées spatiales (x, y) que le pixel donné 41 ;
- C est le coefficient de correction normalisé à 1 ;
- $R_1$ et $R_2$ sont des fonctions de répartition.

Les fonctions de répartition $R_1$ et $R_2$ doivent respecter un certain nombre de contraintes, à savoirs :

- $R_1$ (C) + $R_2$ (C) $\leq$ 1,
- $R_1$ est une fonction décroissante telle que $R_1$ (0) = 1,
- $R_2$ est une fonction croissante telle que $R_2$ (1) = 1.

Les deux paramètres $R_1$ (C) et $R_2$ (C) sont par exemple calculés lors d'une étape particulière 28 effectuée après le calcul du coefficient de correction C.

La contrainte $R_1$ (0) = 1 garantit que lorsque C = 0, la valeur d'amplitude du pixel corrigé est égale à la valeur d'amplitude du pixel de l'image endommagée (pas de remplacement). De même, la contrainte $R_2$ (1) = 1 garantit que lorsque C = 1, la valeur d'amplitude du pixel corrigé est égale à la valeur d'amplitude du pixel de l'image de référence (remplacement complet). Entre ces deux cas extrêmes, c'est-à-dire si 0 < C < 1, la valeur d'amplitude du pixel corrigé est égale à une somme pondérée des valeurs d'amplitude du pixel de l'image endommagée et du pixel de l'image de référence (remplacement pondéré).

En d'autres termes, le pixel donné 41 de l'image endommagée 31 est remplacé par le pixel correspondant 42 de l'image de référence 32 proportionnellement au bruit qu'il est supposé présenter, ce dernier étant indiqué par le coefficient de correction C associé à ce pixel donné 41.

Un second mode de réalisation de la stratégie de correction prédéterminée consiste, pour chaque pixel donné 41 de l'image endommagée 31, à calculer une valeur d'amplitude de pixel corrigé $I_t''$ (x, y ) selon la formule suivante :

$$I_t'' (x, y ) = R_1 (C) . I_t(x, y ) + R_2(C) . I_{t-1} (x, y) + R_3(C) . I_{t,F} (x, y)$$

où :

- $I_t(x, y )$ est la valeur d'amplitude du pixel donné 41 de l'image endommagée 31 ;
- $I_{t-1}(x, y )$ est la valeur d'amplitude du pixel 42 de l'image de référence 32 possédant les mêmes coordonnées spatiales (x, y) que le pixel donné 41 ;
- $I_{t,F} (x, y )$ est la valeur d'amplitude du pixel d'une image filtrée possédant les mêmes coordonnées spatiales (x, y) que le pixel donné 41, l'image filtrée étant obtenue par un filtrage moyen ou médian ou passe-bas ou tout autre filtrage adapté au bruit traité de l'image endommagée 31 ;
- C est le coefficient de correction normalisé à 1 ;
- $R_1$, $R_2$ et $R_3$ sont des fonctions de répartition.

Les fonctions de répartition doivent respecter un certain nombre de contraintes, à savoir :

- $R_1$ (C) + $R_2$ (C) + $R_3$ (C) ≤ 1,
- $R_1$ est une fonction décroissante telle que $R_1$ (0) = 1,
- $R_2$ est une fonction croissante telle que $R_2$(1) = 1.

Le paramètre $R_3$ (C), qui constitue un paramètre supplémentaire par rapport au premier mode de réalisation présenté auparavant, est par exemple calculé lors d'une étape particulière 29 effectuée après le calcul du coefficient de correction C.

Selon cette variante, l'étape de correction de chaque pixel donné de l'image endommagée 31 est réalisée non seulement en fonction des images source et référence, mais également en fonction d'une image source préfiltrée.

Optionnellement, le procédé de l'invention peut comprendre une étape préalable 26 (cf fig. 2 et 3) de correction de gain, visant à équilibrer les valeurs d'amplitude des pixels de l'image endommagée 31 avec celles des pixels de l'image de référence 32. L'image endommagée précorrigée 33 ainsi obtenue est utilisée à la place de l'image endommagée 31 dans toutes les autres étapes 21 à 25, 25', 28 du procédé.

Cette étape 26 de correction de gain consiste à :

- calculer l'écart entre les valeurs moyennes des premier et second histogrammes H1, H2 des niveaux d'amplitude des pixels respectivement de l'image endommagée 31 et de l'image de référence 32, cet écart pouvant s'exprimer sous la forme d'un gain G ;
- corriger les valeurs d'amplitude des pixels de l'image endommagée 31 en fonction de cet écart de valeur moyenne, en multipliant la valeur d'amplitude de chaque pixel de l'image endommagée 31 par l'inverse du gain G, c'est-à-dire $G^{-1}$.

Le procédé de l'invention n'est pas dépendant du type de bruit affectant les images de la séquence source 2. Il s'applique notamment, mais non exclusivement, au traitement en temps réel d'images numériques endommagées.

On présente maintenant, en relation avec les figures 8 et 9, une variante du procédé de l'invention. La figure 8 présente de façon schématique les étapes successives de traitement de chaque image selon cette variante et la figure 9 illustre cette variante en présentant un exemple d'images à différents niveaux de traitement.

Dans cette variante, les images numériques endommagée 31 de la séquence source 2 constituent des images numériques à corriger 80 de niveau 0. Pour chacune de ces images numériques à corriger 80 de niveau 0, on effectue notamment les étapes successives suivantes :

- réduction 81 de la taille de l'image numérique à corriger 80 de niveau 0, de façon à obtenir une image numérique à corriger 82 de niveau 1 ;
- réduction 83 de la taille de l'image numérique à corriger 82 de niveau 1, de façon à obtenir une image numérique à corriger 84 de niveau 2 ;
- traitement 85, de niveau hiérarchique 2, de l'image numérique à corriger 84 de niveau 2, de façon à obtenir une image numérique corrigée 86 de niveau 2 ;
- agrandissement 87 de l'image numérique corrigée 86 de niveau 2, de façon à obtenir une image numérique corrigée 88 de niveau 1 ;
- traitement 89, de niveau hiérarchique 1, de l'image numérique corrigée 88 de niveau 1, de façon à obtenir une image numérique doublement corrigée 90 de niveau 1;
- agrandissement 91 de l'image numérique doublement corrigée 90 de niveau 1, de façon à obtenir une image numérique doublement corrigée 92 de niveau 0 ;
- traitement 93, de niveau hiérarchique 0, de l'image numérique doublement corrigée 92 de niveau 0, de façon à obtenir une image numérique triplement corrigée 94 de niveau 0.

Par référence au début de la présente description, cette image numérique triplement corrigée 94 de niveau 0 constitue l'image numérique corrigée de la séquence de sortie 3 correspondant à l'image numérique endommagée 31 de la séquence source 2.

Selon l'invention, au moins une des étapes de traitement 85, 89, 93, effectuée à un niveau hiérarchique donné (niveau 2, 1 ou 0 respectivement), consiste à mettre en oeuvre au moins une fois les étapes de base présentées précédemment en relation avec les figures 1 à 7 (à savoir les étapes de calcul des différents paramètres P1, P2, P3, P4 et du coefficient de correction C, puis de correction proprement dite).

En d'autres termes, pour chaque niveau hiérarchique (niveau 2, 1 ou 0), le traitement 85, 89, 93 peut consister à effectuer une ou plusieurs fois les étapes de base précitées et/ou à effectuer un ou plusieurs filtrages (par exemple, du type moyen, médian ou passe-bas).

Il est possible de pondérer au moins certains des paramètres P1, P2, P3, P4 en fonction du niveau hiérarchique (niveau 2, 1 ou 0) du traitement 85, 89, 93 que constituent au moins partiellement les étapes de base.

Ainsi, afin de conserver le déplacement de gros objets, il est préférable que, pour les traitements de niveaux supérieurs, l'effet de certains paramètres (par exemple, le paramètre temporel P3) soit diminué et/ou l'effet d'autres paramètres (par exemple, le paramètre local P2) soit favorisé.

Il est clair que cette variante de l'invention n'est pas limitée à deux niveaux hiérarchisés de traitement, mais s'applique plus généralement dans tous les cas où il existe au moins deux niveaux de traitement. Pour chaque niveau supplémentaire, il suffit de réitérer:

- dans le sens des niveaux hiérachiques croissants, l'étape de réduction de taille 81, 83 ; et
- dans le sens des niveaux hiérachiques décroissants, les étapes de traitement 85, 89, 93 et d'agrandissement 87, 91.

## Revendications

1. Procédé de traitement d'une séquence source (2) d'images numériques endommagées, du type permettant d'obtenir une séquence de sortie (3) d'images numériques corrigées, chacune des images numériques endommagées ou corrigées étant décrite pixel par pixel, chacun desdits pixels étant caractérisé par un niveau d'amplitude parmi une pluralité de niveaux d'amplitude possibles,
   caractérisé en ce que ledit procédé comprend pour chaque image numérique endommagée (31) de ladite séquence source (2), les étapes de base suivantes :

   - calcul (21), pour l'ensemble des pixels de l'image endommagée (31), d'un premier paramètre (P1), dit paramètre global, d'estimation de la correction à apporter à chacun des pixels de l'image endommagée, en fonction dudit ensemble des pixels de l'image endommagée (31) et de l'ensemble des pixels d'une image de référence (32), ladite image de référence (32) étant une image corrigée qui résulte de la correction de l'image précédant ladite image endommagée dans ladite séquence source (2) ;
   - calcul (22), pour chaque pixel donné (41) de l'image endommagée (31), d'un second paramètre (P2), dit paramètre local, d'estimation de la correction à apporter audit pixel donné, en fonction dudit pixel donné (41) et d'autres pixels, dits pixels voisins (44), localisés dans un voisinage prédéterminé (43) dudit pixel donné (41) ;
- calcul (23), pour chaque pixel donné (41) de l'image endommagée (31), d'un troisième paramètre (P3), dit paramètre temporel, d'estimation de la correction à apporter audit pixel donné (41), en fonction dudit pixel donné (41) et du pixel (42) de l'image de référence (32) possédant les mêmes coordonnées spatiales (x, y) que ledit pixel donné ;
- calcul (24), pour chaque pixel donné (41) de l'image endommagée (31), d'un coefficient de correction (C), par combinaison desdits premier, second et troisième paramètres (P1, P2, P3) d'estimation associés audit pixel donné (41) ;
- correction (25), selon une stratégie de correction prédéterminée, de chaque pixel donné (41) de l'image endommagée (31) de façon à obtenir le pixel correspondant de l'image corrigée de la séquence de sortie (3), en fonction du coefficient de correction (C) associé audit pixel donné (41), du pixel donné (41) de l'image endommagée (31) et du pixel de (42) l'image de référence (32) possédant les mêmes coordonnées spatiales (x, y) que ledit pixel donné (41).

2. Procédé selon la revendication 1, caractérisé en ce que ledit calcul (21), pour l'ensemble des pixels de l'image endommagée (31), du premier paramètre (P1) s'écrit selon la formule suivante :

$$P1 = K + f_E(H1, H2)$$

où :

- K est une valeur de décalage prédéterminée ;
- H1 est un premier histogramme des niveaux d'amplitude des pixels de l'image endommagée (31) ;
- H2 est un second histogramme des niveaux d'amplitude des pixels de l'image de référence (32) ;
- $f_E$ est une fonction d'erreur prédéterminée permettant de calculer un écart entre deux fonctions.

3. Procédé selon l'une quelconque des revendications 1 et 2, caractérisé en ce que ledit calcul (22) du second paramètre (P2) est effectué simultanément pour tous les pixels de l'image endommagée (31), et s'écrit selon la formule suivante :

$$[M_{P2}] = (1/\alpha_2) . ([I_t] - F_2[I_t])$$

où:

- $[M_{P2}]$ est une matrice des seconds paramètres P2 associés chacun à un pixel distinct de l'image endommagée (31) ;
- $[I_t]$ est une matrice des valeurs d'amplitude des pixels de l'image endommagée (31) ;
- $F_2$ est un filtrage prédéterminé;
- $\alpha_2$ est un premier facteur de normalisation.

4. Procédé selon l'une quelconque des revendications 1 à 3, caractérisé en ce que ledit calcul (23) du troisième paramètre (P3) est effectué simultanément pour tous les pixels de l'image endommagée (31), et s'écrit selon la formule suivante :

$$[M_{P3}] = (1/\alpha_3) . F_3 \{[I_t] - [I_{t-1}]\}$$

où :

- $[M_{P3}]$ est une matrice des troisièmes paramètres P3 associés chacun à un pixel distinct de l'image endommagée (31) ;
- $[I_t]$ est une matrice des valeurs d'amplitude des pixels de l'image endommagée (31) ;
- $[I_{t-1}]$ est une matrice des valeurs d'amplitude des pixels de l'image de référence (32) ;
- $F_3$ est un filtrage moyen ou médian ou passe-bas ;
- $\alpha_3$ est un second facteur de normalisation.

5. Procédé selon l'une quelconque des revendications 1 à 4, caractérisé en ce que ledit calcul (24) du coefficient de correction (C) s'écrit selon la formule suivante :

$$C = \max\,[1, P1 \,.\, f_c\,(P2, P3)]$$

où :

- P1, P2 et P3 sont lesdits premier, second et troisième paramètres normalisés à 1 ;
- $f_c$ est une fonction de combinaison prédéterminée.

6. Procédé selon l'une quelconque des revendications 1 à 5, caractérisé en ce que ladite stratégie de correction prédéterminée consiste, pour chaque pixel donné (41) de l'image endommagée (31), à calculer une valeur d'amplitude de pixel corrigé $I_t'\,(x, y)$ selon la formule suivante :

$$I_t'\,(x, y) = R_1\,(C)\,.\,I_t(x, y) + R_2\,(C)\,.\,I_{t-1}\,(x, y)$$

où :

- $I_t\,(x, y)$ est la valeur d'amplitude du pixel donné (41) de l'image endommagée (31) ;
- $I_{t-1}\,(x, y)$ est la valeur d'amplitude du pixel (42) de l'image de référence (32) possédant les mêmes coordonnées spatiales (x, y) que le pixel donné (41) ;
- C est le coefficient de correction normalisé à 1 ;
- $R_1$ et $R_2$ sont des fonctions de répartition respectant les contraintes suivantes : $R_1\,(C) + R_2\,(C) \leq 1$, $R_1$ est une fonction décroissante telle que $R_1\,(0) = 1$, $R_2$ est une fonction croissante telle que $R_2\,(1) = 1$.

7. Procédé selon selon l'une quelconque des revendications 1 à 5, caractérisé en ce ladite stratégie de correction prédéterminée consiste, pour chaque pixel donné (41) de l'image endommagée (31), à calculer une valeur d'amplitude de pixel corrigé $I_t''\,(x, y)$ selon la formule suivante :

$$I_t''(x, y) = R_1(C)\,.\,I_t(x, y) + R_2(C)\,.\,I_{t-1}\,(x, y) + R_3\,(C)\,.\,I_{t,F}(x, y)$$

où :

- $I_t\,(x, y)$ est la valeur d'amplitude du pixel donné (41) de l'image endommagée (31) ;
- $I_{t-1}\,(x, y)$ est la valeur d'amplitude du pixel (42) de l'image de référence (32) possédant les mêmes coordonnées spatiales (x, y) que le pixel donné (41);
- $I_{t,F}\,(x, y)$ est la valeur d'amplitude du pixel d'une image filtrée possédant les mêmes coordonnées spatiales (x, y) que le pixel donné (41), ladite image filtrée étant obtenue par un filtrage prédéterminé de l'image endommagée (31) ;
- C est le coefficient de correction normalisé à 1 ;
- $R_1$, $R_2$ et $R_3$ sont des fonctions de répartition respectant les contraintes suivantes : $R_1\,(C) + R_2\,(C) + R_3\,(C) \leq 1$, $R_1$ est une fonction décroissante telle que $R_1\,(0) = 1$, $R_2$ est une fonction croissante telle que $R_2\,(1) = 1$.

8. Procédé selon l'une quelconque des revendications 1 à 7, caractérisé en ce qu'il comprend, pour chaque pixel donné (41) de l'image endommagée (31), les étapes de base supplémentaires suivantes :

- calcul d'une probalité d'erreur sur la valeur d'amplitude du pixel donné (41), en fonction de l'écart entre le nombre de pixel de l'image endommagée (H1(n)) et le nombre de pixel de l'image de référence (H2(n)) possédant la même valeur d'amplitude (n) que ledit pixel donné (41), ladite probabilité d'erreur constituant un quatrième paramètre (P4) d'estimation de la correction à apporter audit pixel donné ;
- pondération (61 ; 71) par ledit quatrième paramètre (P4) des premier et second paramètres (P1, P2) ou du coefficient de correction (C) associés audit pixel donné (41).

9. Procédé selon l'une quelconque des revendications 1 à 8, caractérisé en ce qu'il comprend les étapes de base préalables suivantes :

- calcul d'un premier histogramme (H1) des niveaux d'amplitude des pixels de l'image endommagée (31) ;
- calcul d'un second histogramme (H2) des niveaux d'amplitude des pixels de l'image de référence (32) ;
- calcul de l'écart entre les valeurs moyennes desdits premier et second histogrammes;
- correction des valeurs d'amplitude des pixels de l'image endommagée (31) en fonction dudit écart de valeur moyenne, de façon à équilibrer les valeurs d'amplitude des pixels de l'image endommagée (31) avec celles des pixels de l'image de référence (32), et obtenir une image endommagée précorrigée (33) qui est utilisée à la place de l'image endommagée (31) dans toutes les autres étapes (21 à 25, 25', 28) dudit procédé.

10. Procédé selon l'une quelconque des revendications 1 à 9, du type consistant, pour chaque image numérique endommagée de la séquence source, constituant une image numérique à corriger (80) de niveau n, à effectuer notamment les étapes successives suivantes:

- réduction (81, 83) de la taille de l'image numérique à corriger (80) de niveau n, de façon à obtenir une image numérique à corriger (84) de niveau n+k, avec k ≥ 1 ;
- traitement (85), de niveau hiérarchique n+k, de l'image numérique à corriger (84) de niveau n+k, de façon à obtenir une image numérique corrigée (86) de niveau n+k ;
- agrandissement (87) de la taille de l'image numérique corrigée (86) de niveau n+k, de façon à obtenir une image numérique corrigée (88) de niveau n+k-1 ;
- éventuellement, réitération des deux étapes précédentes de traitement (85) et d'agrandissement de taille (87), jusqu'à l'obtention d'une image numérique corrigée (92) de niveau n ;
- éventuellement, traitement (93), de niveau hiérarchique n, de l'image numérique corrigée (92) de niveau n,

caractérisé en ce qu'au moins une desdites étapes de traitement (85, 89, 93), d'un niveau hiérarchique donné, consiste à mettre en oeuvre au moins une fois lesdites étapes de base.

11. Procédé selon la revendication 10, caractérisé en ce qu'au moins un desdits premier, second, troisième et quatrième paramètres (P1, P2, P3, P4) est pondéré en fonction du niveau hiérarchique du traitement que constituent au moins partiellement lesdites étapes de base.

12. Application du procédé selon l'une quelconque des revendications 1 à 11 au traitement en temps réel d'une séquence source d'images numériques endommagées.

**Patentansprüche**

1. Verfahren zum Verarbeiten einer Quellenfolge (2) beschädigter digitaler Bilder, von der Art, die das Erhalten einer Ausgangsfolge (3) korrigierter digitaler Bilder ermöglicht, wobei jedes der beschädigten oder korrigierten digitalen Bilder Pixel für Pixel beschrieben wird und wobei jedes dieser Pixel von einem Amplitudenniveau unter einer Vielzahl möglicher Amplitudenniveaus charakterisiert ist, dadurch gekennzeichnet, daß das Verfahren für jedes beschädigte digitale Bild (31) der Quellenfolge (2) die folgenden Grundschritte umfaßt:

- Berechnung (21), für die Gesamtheit der Pixel des beschädigten Bildes (31), eines ersten Parameters (P1), genannt Globalparameter (P1), zum Schätzen der für ein jedes Pixel des beschädigten Bildes erforderlichen Korrektur, als Funktion dieser Gesamtheit von Pixeln des beschädigten Bildes (31) und der Gesamtheit der Pixel eines Referenzbildes (32), wobei es sich beim Referenzbild (32) um ein korrigiertes Bild handelt, das sich aus der Korrektur des Bildes ergibt, welches vor dem beschädigten Bild in der Quellenfolge (2) liegt;

- Berechnung (22), für jedes gegebene Pixel (41) des beschädigten Bildes (31), eines zweiten Parameters (P2), genannt örtlicher Parameter, zum Schätzen der für das gegebene Pixel erforderlichen Korrektur, als Funktion des gegebenen Pixels (41) und anderer Pixel (44), genannt benachbarte Pixel, die sich in einer vorgegebenen Umgebung (43) des gegebenen Pixels (41) befinden;

- Berechnung (23), für jedes gegebene Pixel (41) des beschädigten Bildes (31), eines dritten Parameters (P3), genannt zeitlicher Parameter, zum Schätzen der für das gegebene Pixel erforderlichen Korrektur (41), als Funktion des gegebenen Pixels (41) und des Pixels (42) des Referenzbildes (32), welches die gleichen Raumkoordinaten (x, y) wie das gegebene Pixel hat;

- Berechnung (24), für jedes gegebene Pixel (41) des beschädigten Bildes (31), eines Korrekturkoeffizienten (C), durch Kombinieren der ersten, zweiten und dritten, dem gegebenen Pixel (41) zugeordneten Schätzparameter (P1, P2, P3);

- Korrektur (25) gemäß einer vorgegebenen Korrekturstrategie eines jeden gegebenen Pixels (41) des beschädigten Bildes (31), um das entsprechende Pixel des korrigierten Bildes der Ausgangsfolge (3) zu erhalten, als Funktion des mit dem gegebenen Pixel (41) assoziierten Korrekturkoeffizienten (C), des gegebenen Pixels (41) des beschädigten Bildes (31) und des Pixels (42) des Referenzbildes (32), welches die gleichen Raumkoordinaten (x, y) wie das gegebene Pixel (41) hat.

2. Verfahren gemäß Anspruch 1,
dadurch gekennzeichnet, daß die Berechnung (21) für die Gesamtheit der Pixel des beschädigten Bildes (31) des ersten Parameters (P1) nach der folgenden Formel beschrieben wird:

$$P1 = K + f_E \, (H1, H2),$$

wobei:

- K ein vorgegebener Verschiebungswert ist;
- H1 ein erstes Histogramm der Amplitudenniveaus der Pixel des beschädigten Bildes (31) ist;
- H2 ein zweites Histogramm der Amplitudenniveaus der Pixel des Referenzbildes (32) ist;
- $f_E$ eine vorgegebene Fehlerfunktion ist, welche das Berechnen des Abstandes zwischen zwei Funktionen ermöglicht.

3. Verfahren gemäß einem der Ansprüche 1 und 2,
dadurch gekennzeichnet, daß die Berechnung (22) des zweiten Parameters (P2) gleichzeitig für alle Pixel des beschädigten Bildes (31) erfolgt und nach der folgenden Formel beschrieben wird:

$$[M_{P2}] = (1/\alpha_2) \cdot ([I_t] - F_2[I_t]),$$

wobei:

- $[M_{P2}]$ eine Matrix der zweiten Parameter P2 ist, die jeweils einem verschiedenen Pixel des beschädigten Bildes (31) zugeordnet sind;
- $[I_t]$ eine Matrix der Amplitudenwerte der Pixel des beschädigten Bildes (31) ist;
- $F_2$ eine vorgegebene Filterung ist;
- $\alpha_2$ ein erster Normierungsfaktor ist.

4. Verfahren gemäß einem der Ansprüche 1 bis 3,
dadurch gekennzeichnet, daß die Berechnung (23) des dritten Parameters (P3) gleichzeitig für alle Pixel des beschädigten Bildes (31) erfolgt und gemäß der folgenden Formel beschrieben wird:

$$[M_{P3}] = (1/\alpha_3) \cdot F_3 \, \{[I_t] - [I_{t-1}]\},$$

wobei:

- $[M_{P3}]$ eine Matrix der dritten Parameter P3 ist, die jeweils einem verschiedenen Pixel des beschädigten Bildes (31) zugeordnet sind;
- $[I_t]$ eine Matrix der Amplitudenwerte der Pixel des beschädigten Bildes (31) ist;
- $[I_{t-1}]$ eine Matrix der Amplitudenwerte der Pixel des Referenzbildes (32) ist;
- $F_3$ eine durchschnittliche, mittlere oder Tiefpaß-Filterung ist;
- $\alpha_3$ ein zweiter Normierungsfaktor ist.

5. Verfahren gemäß einem der Ansprüche 1 bis 4,
dadurch gekennzeichnet, daß die Berechnung (24) des Korrekturkoeffizienten (C) gemäß der folgenden Formel

EP 0 843 867 B1

beschrieben wird:

$$C = \max [1, P1 \cdot f_c (P2, P3)]$$

wobei:

- P1, P2 und P3 die auf 1 normierten ersten, zweiten und dritten Paramter sind;
- $f_c$ eine vorgegebene Kombinierungsfunktion ist.

6. Verfahren gemäß einem der Ansprüche 1 bis 5,
dadurch gekennzeichnet, daß die vorgegebene Korrekturstrategie für jedes gegebene Pixel (41) des beschädigten Bildes (31) im Berechnen eines Amplitudenwertes des korrigierten Pixels $I_t'(x, y)$ gemäß der folgenden Formel besteht:

$$I_t'(x, y) = R_1 (C) \cdot I_t(x, y) + R_2(C) \cdot I_{t-1}(x, y)$$

wobei:

- $I_t(x, y)$ der Amplitudenwert des gegebenen Pixels (41) des beschädigten Bildes (31) ist;
- $I_{t-1}(x, y)$ der Amplitudenwert des Pixels (42) des Referenzbildes (32) ist, welches die gleichen Raumkoordinaten $(x, y)$ wie das gegebene Pixel (41) hat;
- C der auf 1 normierte Korrekturkoeffizient ist;
- $R_1$ und $R_2$ Verteilungsfunktionen sind, welche die folgenden Bedingungen erfüllen: $R_1(C) + R_2(C) \leq 1$, $R_1$ ist eine abnehmende Funktion derart, daß $R_1(O) = 1$, $R_2$ ist eine zunehmende Funktion derart, daß $R_2(1) = 1$ ist.

7. Verfahren gemäß einem der Ansprüche 1 bis 5,
dadurch gekennzeichnet, daß die vorgegebene Korrekturstrategie für jedes gegebene Pixel (41) des beschädigten Bildes (31) in der Berechnung eines Amplitudenwertes des korrigierten Pixels $I_t''(x, y)$ gemäß der folgenden Formel besteht:

$$I_t''(x, y) = R_1 (C) \cdot I_t(x, y) + R_2(C) \cdot I_{t-1}(x,y) + R_3(C) \cdot I_{t,F}(x, y)$$

wobei:

- $I_t(x, y)$ ein Amplitudenwert des gegebenen Pixels (41) des beschädigten Bildes (31) ist;
- $I_{t-1}(x, y)$ der Amplitudenwert des Pixels (42) des Referenzbildes (32) ist, welches die gleichen Raumkoordinaten $(x, y)$ wie das gegebene Pixel (41) hat;
- $I_{t,F}(x, y)$ der Amplitudenwert des Pixels eines gefilterten Bildes ist, welches die gleichen Raumkoordinaten $(x, y)$ wie das gegebene Pixel (41) hat, wobei das gefilterte Bild durch eine vorgegebene Filterung des beschädigten Bildes (31) erhalten wird;
- C der auf 1 normierte Korrekturkoeffizient ist;
- $R_1$, $R_2$ und $R_3$ Verteilungsfunktionen sind, welche die folgenden Bedingungen erfüllen: $R_1(C) + R_2 (C) + R_3 (C) \leq 1$, $R_1$ ist eine abnehmende Funktion, derart, daß $R_1 (0) = 1$, $R_2$ ist eine zunehmende Funktion, derart, daß $R_2 (1) = 1$.

8. Verfahren gemäß einem der Ansprüche 1 bis 7,
dadurch gekennzeichnet, daß es für jedes gegebene Pixel (41) des beschädigten Bildes (31) die folgenden zusätzlichen Grundschritte umfaßt:

- Berechnung einer Fehlerwahrscheinlichkeit über den Amplitudenwert des gegebenen Pixels (41), als Funktion des Abstandes zwischen der Pixelanzahl des beschädigten Bildes (H1 (n)) und der Pixelanzahl des Referenzbildes (H2(n)) mit dem gleichen Amplitudenwert (n) wie das gegebene Pixel (41), wobei die Fehlerwahrscheinlichkeit einen vierten Parameter (P4) zum Schätzen der für das gegebene Pixel erforderlichen Korrektur darstellt;

15

- Wichtung (61; 71) durch diesen vierten Parameter (P4) der ersten und zweiten Parameter (P1, P2) oder des dem gegebenen Pixel (41) zugeordneten Korrekturkoeffizienten (C).

9. Verfahren gemäß einem der Ansprüche 1 bis 8, dadurch gekennzeichnet, daß es die folgenden vorhergehenden Grundschritte umfaßt:

   - Berechnung eines ersten Histogramms (H1) der Amplitudenniveaus der Pixel des beschädigten Bildes (31);

   - Berechnung eines zweiten Histogramms (H2) der Amplitudenniveaus der Pixel des Referenzbildes (32);

   - Berechnung des Abstandes zwischen den Durchschnittswerten der ersten und zweiten Histogramme;

   - Korrektur der Amplitudenwerte der Pixel des beschädigten Bildes (31) als Funktion des Abstandes des Durchschnittswertes, um die Amplitudenwerte der Pixel des beschädigten Bildes (31) mit denen der Pixel des Referenzbildes (32) auszugleichen und somit ein vorkorrigiertes beschädigtes Bild (33) zu erzielen, das an Stelle des beschädigten Bildes (31) in allen anderen Schritten (21 bis 25, 25', 28) des Verfahrens angewandt wird.

10. Verfahren gemäß einem der Ansprüche 1 bis 9, von der Art die darin besteht, für jedes beschädigte digitale Bild der Quellenfolge, die ein zu korrigierendes digitales Bild (80) des Niveaus n bildet, insbesondere die folgenden aufeinanderfolgenden Schritte auszuführen:

   - Reduzierung (81, 83) der Größe des zu korrigierenden digitalen Bildes (80) des Niveaus n, um ein zu korrigierendes digitales Bild (84) des Niveaus n + k mit k ≥ 1 zu erhalten;

   - Verarbeitung (85) des hierarchischen Niveaus n+k, des zu korrigierenden digitalen Bildes (84) des Niveaus n+k, um ein korrigiertes digitales Bild (86) des Niveaus n + k zu erhalten;

   - Vergrößerung (87) des korrigierten Bildes (86) des Niveaus n+k, um ein korrigiertes digitales Bild (88) des Niveaus n+k-1 zu erzielen;

   - gegebenenfalls, Wiederholung der zwei vorhergehenden Schritte (85) und der Vergrößerung (87), bis zum Erhalten eines korrigierten digitalen Bildes (92) des Niveaus n;

   - gegebenenfalls, Verarbeitung (93) des hierarchischen Niveaus n des korrigierten digitalen Bildes (92) des Niveaus n,

   dadurch gekennzeichnet, daß mindestens einer der Verarbeitungsschritte (85, 89, 93) eines gegebenen hierarchischen Niveaus darin besteht, daß die Grundschritte mindestens einmal ausgeführt werden.

11. Verfahren gemäß Anspruch 10, dadurch gekennzeichnet, daß mindestens einer unter den ersten, zweiten, dritten und vierten Parametern (P1, P2, P3, P4) als Funktion des hierarchischen Verarbeitungsniveaus gewichtet wird, die zumindest teilweise von den Grundschritten gebildet werden.

12. Anwendung des Verfahrens gemäß einem der Ansprüche 1 bis 11 auf die Echtzeitverarbeitung einer Quellenfolge beschädigter digitaler Bilder.

## Claims

1. Method for processing a source sequence (2) of damaged digital images, of the type allowing an output sequence (3) of corrected digital images to be obtained, each of the damaged or corrected digital images being described pixel by pixel, each of the said pixels being characterised by an amplitude level among a plurality of possible amplitude levels, characterised in that the said method comprises the following basic steps for each damaged digital image (31) in the said source sequence (2):

   - calculation (21), for the set of pixels in the damaged image (31), of a first parameter (P1), termed the global parameter, for estimation of the correction to be applied to each pixel in the damaged image as a function of the said set of pixels in the damaged image (31) and of the set of pixels in a reference image (32), the said reference image (32) being a corrected image resulting from the correction of the image preceding the said damaged image in the said source sequence (2);

- calculation (22), for each given pixel (41) in the damaged image (31), of a second parameter (P2), termed the local parameter, for estimation of the correction to be applied to the said given pixel as a function of the said given pixel (41) and of other pixels, termed neighbouring pixels (44), located within a predetermined vicinity (43) of the said given pixel (41);
- calculation (23), for each given pixel (41) in the damaged image (31), of a third parameter (P3), termed the temporal parameter, for estimation of the correction to be applied to the said given pixel (41) as a function of the said given pixel (41) and of the pixel (42) in the reference image (32) having the same spatial coordinates (x, y) as the said given pixel;
- calculation (24), for each given pixel (41) in a damaged image (31), of a correction factor (C) by combining the said first, second and third estimation parameters (P1, P2, P3) associated with the said given pixel (41):
- correction (25), in accordance with a predetermined correction strategy, of each given pixel (41) in the damaged image (31) so as to obtain the corresponding pixel in the corrected image in the output sequence (3), as a function of the correction factor (C) associated with the said given pixel (41), the given pixel (41) in the damaged image (31) and the pixel in (42) (sic) the reference image (32) having the same spatial coordinates (x, y) as the said given pixel (41).

2. Method according to Claim 1, characterised in that the said calculation (21), for the set of pixels in the damaged image (31), of the first parameter (P1) is written in accordance with the following equation:

$$P1 = K + f_E (H1, H2)$$

where:

- K is a predetermined offset value;
- H1 is a first histogram of the amplitude levels of the pixels in the damaged image (31);
- H2 is a second histogram of the amplitude levels of the pixels in the reference image (32);
- $f_E$ is a predetermined error function enabling calculation of a deviation between two functions.

3. Method according to either of Claims 1 and 2, characterised in that the said calculation (22) of the second parameter (P2) is performed simultaneously for all pixels in the damaged image (31) and is written in accordance with the following equation:

$$[M_{P2}] = (1/\alpha_2) \cdot ([I_t] - F_2 [I_t])$$

where:

- $[M_{P2}]$ is a matrix of the second parameters P2 each associated with one distinct pixel in the damaged image (31);
- $[I_t]$ is a matrix of the amplitude values of the pixels in the damaged image (31);
- $F_2$ is a predetermined filtering;
- $\alpha_2$ is a first normalisation factor.

4. Method according to any one of Claims 1 to 3, characterised in that the said calculation (23) of the third parameter (P3) is performed simultaneously for all pixels in the damaged image (31) and is written in accordance with the following equation:

$$[M_{P3}] = (1/\alpha_3) \cdot F_3 \{[I_t] - [I_{t-1}]\}$$

where:

- $[M_{P3}]$ is a matrix of the third parameters P3 each associated with one distinct pixel in the damaged image (31);

- $[I_t]$ is a matrix of the amplitude values of the pixels in the damaged image (31);
- $[I_{t-1}]$ is a matrix of the amplitude values of the pixels in the reference image (32);
- $F_3$ is an average or median or low-pass filtering;
- $\alpha_3$ is a second normalisation factor.

5. Method according to any one of Claims 1 to 4, characterised in that the said calculation (24) of the correction factor (C) is written in accordance with the following equation:

$$C = \max [1, P1 . f_c (P2, P3)]$$

where:

- P1, P2 and P3 are the said first, second and third parameters normalised to 1;
- $f_c$ is a predetermined combination function.

6. Method according to any one of Claims 1 to 5, characterised in that the said predetermined correction strategy consists, for each given pixel (41) in the damaged image (31), in calculating an amplitude value for the corrected pixel $I_t'$ (x, y) in accordance with the following equation:

$$I_t' (x, y) = R_1 (C) . I_t (x, y) + R_2 (C) . I_{t-1} (x, y)$$

where:

- $I_t$ (x, y) is the amplitude value of the given pixel (41) in the damaged image (31);
- $I_{t-1}$ (x, y) is the amplitude value of the pixel (42) in the reference image (32) having the same spatial coordinates (x, y) as the given pixel (41);
- C is the correction factor normalised to 1;
- $R_1$ and $R_2$ are distribution functions respecting the following constraints: $R_1 (C) + R_2 (C) \leq 1$, $R_1$ is a decreasing function such that $R_1 (0) = 1$, $R_2$ is an increasing function such that $R_2 (1) = 1$.

7. Method according to any one of Claims 1 to 5, characterised in that the said predetermined correction strategy consists, for each given pixel (41) in the damaged image (31), in calculating an amplitude value for the corrected pixel $I_t''$ (x, y) in accordance with the following equation:

$$I_t'' (x, y) = R_1 (C) . I_t (x, y) + R_2 (C) . I_{t-1} (x, y) + R_3 (C) . I_{t,F} (x, y)$$

where:

- $I_t''$ (x, y) is the amplitude value of the given pixel (41) in the damaged image (31);
- $I_{t-1}$ (x, y) is the amplitude value of the pixel (42) in the reference image (32) having the same spatial coordinates (x, y) as the given pixel (41);
- $I_{t,F}$ (x, y) is the amplitude value of the pixel in a filtered image having the same spatial coordinates (x, y) as the given pixel (41), the said filtered image being obtained by predetermined filtering of the damaged image (31);
- C is the correction factor normalised to 1;
- $R_1$, $R_2$ and $R_3$ are distribution functions respecting the following constraints: $R_1 (C) + R_2 (C) + R_3 (C) \leq 1$, $R_1$ is a decreasing function such that $R_1 (0) = 1$, $R_2$ is an increasing function such that $R_2 (1) = 1$.

8. Method according to any one of Claims 1 to 7, characterised in that it comprises, for each given pixel (41) in the damaged image (31), the following supplementary basic steps:

- calculation of an error probability for the amplitude value of the given pixel (41), as a function of the deviation between the number of pixel (sic) in the damaged image (H1(n)) and the number of pixel (sic) in the reference image (H2(n)) having the same amplitude value (n) as the said given pixel (41), the said error probability constituting a fourth parameter (P4) for estimation of the correction to be applied to the said given pixel;

- weighting (61; 71) the first and second parameters (P1, P2) or the correction factor (C) associated with the said given pixel (41) by the said fourth parameter (P4).

9. Method according to any one of Claims 1 to 8, characterised in that it comprises the following preliminary basic steps:

- calculation of a first histogram (H1) of the amplitude levels of the pixels in the damaged image (31);
- calculation of a second histogram (H2) of the amplitude levels of the pixels in the reference image (32);
- calculation of the deviation between the average values of the said first and second histograms,
- correction of the amplitude values of the pixels in the damaged image (31) as a function of the said deviation in the average value, so as to balance the amplitude values of the pixels in the damaged image (31) with those of the pixels in the reference image (32) and to obtain a pre-corrected damaged image (33) that is used instead of the damaged image (31) in all the other steps (21 to 25, 25', 28) of the said method.

10. Method according to any one of Claims 1 to 9, of the type consisting in carrying out in particular the following successive steps for each damaged digital image in the source sequence making up a level n digital image to be corrected (80):

- reduction (81, 83) of the size of the level n digital image to be corrected (80), so as to obtain a level n+k digital image to be corrected (84), where $k \geq 1$ ;
- processing (85), at hierarchical level n+k, the level n+k digital image to be corrected (84) so as to obtain a level n+k corrected digital image (86);
- increasing (87) the size of the level n+k corrected digital image (86) so as to obtain a level n+k-1 corrected digital image (88);
- if necessary, repeating the two previous steps of processing (85) and increasing the size (87), until a level n corrected digital image (92) is obtained;
- if necessary, processing (93), at hierarchical level n, the level n corrected digital image (92),

characterised in that at least one of the said processing steps (85, 89, 93), at a given hierarchical level, consists in employing the said basic steps at least once.

11. Method according to Claim 10, characterised in that at least one of the said first, second, third and fourth parameters (P1, P2, P3, P4) is weighted as a function of the hierarchical level of the processing that the said basic steps at least partially make up.

12. Application of the method according to any one of Claims 1 to 11 to real time processing of a source sequence of damaged digital images.

## Fig. 1

## Fig. 2

Fig. 3

Fig. 4A

Fig. 4B

Fig. 5

Fig. 6

Fig. 7

Fig. 9

Fig. 8